# FASCICULE DE BREVET EUROPEEN

(11) **EP 3 169 541 B1**
(45) Date de publication et mention de la délivrance du brevet: **08.01.2020**
(21) Numéro de dépôt: 15734176.9
(22) Date de dépôt: 06.07.2015
(51) Int. Cl.: B60H 1/00, F24F 13/10, F24F 13/24

(54) **VOLET D'UNE INSTALLATION DE CHAUFFAGE, VENTILATION ET/OU CLIMATISATION POUR HABITACLE DE VEHICULE AUTOMOBILE ET INSTALLATION ASSOCIEE**
KLAPPE FÜR EINE HEIZ-, BELÜFTUNGS- UND/ODER KLIMAANLAGENEINHEIT EINES KRAFTFAHRZEUGINNENRAUMS UND ENTSPRECHENDE EINHEIT
FLAP FOR A MOTOR VEHICLE INTERIOR HEATING, VENTILATION AND/OR AIR CONDITIONING UNIT, AND ASSOCIATED UNIT

(30) Priorité: 18.07.2014 FR 1456972
(43) Date de publication de la demande: 24.05.2017
(73) Titulaire: Valeo Systemes Thermiques, 78320 Le Mesnil Saint Denis (FR)
(72) Inventeur: BROSSERON, Laurent, F-78180 Montigny-le-Bretonneux (FR); VAN SCHAMMELHOUT, Cédric, F-78670 Villenes-sur-Seine (FR); GRELLIER, Michel, F-94260 Fresnes (FR); SERRAN, Aurélien, F-93200 Saint-Denis (FR)
(74) Mandataire: Metz, Gaëlle
(86) Numéro de dépôt international: PCT/EP2015/065338
(87) Numéro de publication internationale: WO 2016/008753

(56) Documents cités:
- EP-A1- 1 759 897
- JP-A- 2001 071 737
- US-A- 4 726 563
- US-A1- 2013 014 912

## Description

La présente invention concerne un volet d'une installation de chauffage, ventilation et/ou climatisation pour un habitacle de véhicule automobile et une installation associée permettant le contrôle de la température de flux d'air dans une ou plusieurs zones de l'habitacle d'un véhicule automobile.

Un véhicule automobile est couramment équipé d'une installation de chauffage, de ventilation et/ou de climatisation qui est destinée à réguler les paramètres aérothermiques de l'air distribué dans l'habitacle, en particulier la température d'un flux d'air délivré par l'installation à l'intérieur de l'habitacle.

Une telle installation comprend un boitier d'entrée d'air qui est équipé de bouches d'entrée d'air pour admettre au moins un flux d'air à l'intérieur du boitier, et d'une bouche de sortie d'air pour évacuer le flux d'air depuis le boitier vers une volute dans laquelle une roue, également appelée pulseur, est mise en œuvre pour aspirer le flux d'air en provenance d'une entrée d'air du boitier d'entrée d'air. L'air entrant dans la volute est alors propulsé vers un dispositif de traitement thermique logeant un moyen de chauffage de l'air et/ou un moyen de refroidissement de l'air. L'ensemble formé par le boitier d'entrée d'air, la volute et le dispositif de traitement thermique constitue l'installation de ventilation, chauffage et/ou climatisation. Ainsi, l'air sortant du boitier d'entrée d'air est évacué vers l'habitacle du véhicule en passant à travers la volute et le dispositif de traitement thermique.

Plus particulièrement, le boitier d'entrée d'air est pourvu d'une bouche d'entrée d'air extérieur qui permet l'admission à l'intérieur du boitier d'entrée d'air d'un flux d'air extérieur en provenance de l'extérieur de l'habitacle, et d'une bouche d'entrée d'air de recirculation qui permet l'admission à l'intérieur du boîtier d'entrée d'air d'un flux d'air de recirculation en provenance de l'habitacle. Un volet mobile pivotant, tel qu'un volet tambour, permet d'ouvrir ou de fermer la bouche d'entrée d'air extérieur ou la bouche d'entrée d'air de recirculation. Plus particulièrement, le volet est mobile entre une première position extrême fermant la bouche d'entrée d'air extérieur et une deuxième position extrême fermant la bouche d'entrée d'air de recirculation.

Le boîtier d'entrée d'air est connecté fluidiquement à une volute logeant une roue pour faire circuler les flux d'air, indifféremment extérieur et/ou de recirculation, depuis une des bouches d'entrée d'air qui leur est affectée, vers la bouche de sortie d'air. Cette bouche de sortie d'air relie le boitier d'entrée d'air à la volute.

Le volet mobile pivotant possède généralement une forme concave, en forme d'hémisphère partiel de sorte qu'en position complètement fermée, le volet joue le rôle d'une paroi courbe de renvoi pour le flux d'air à diriger.

Sous certaines conditions, en particulier quand le volet mobile pivotant d'entrée d'air est dans une position intermédiaire entre la position complètement ouverte ou fermée, plus spécifiquement entre 20 % et 70 % de taux de fermeture, il a été constaté un certain bruit de grondement à basse fréquence, généré par le battement du volet mobile pivotant qui peut s'avérer gênant pour un utilisateur.

Le document japonais JP 2001 071737 divulgue un volet mobile pivotant d'une installation de chauffage, ventilation et/ou climatisation pour un habitacle de véhicule automobile comprenant une paroi concave de renvoi d'un flux d'air bordée par deux parois latérales, ledit volet comprenant au moins un déflecteur transversal se dressant sur la paroi concave et s'étendant entre les deux parois latérales.

Il s'avère que lorsque le volet est notamment placé dans une position de recirculation partielle, des bruits de fonctionnement sont générés.

L'invention a donc pour objectif de proposer un volet mobile pivotant amélioré permettant de réduire la génération de bruit dans les positions de recirculation partielle.

À cet effet, l'invention a pour objet un volet mobile pivotant d'une installation de chauffage, ventilation et/ou climatisation pour un habitacle de véhicule automobile comprenant une paroi concave de renvoi d'un flux d'air bordée par deux parois latérales, caractérisé en ce qu'il comprend au moins un déflecteur transversal se dressant sur la paroi concave et s'étendant entre les deux parois latérales, le déflecteur comprenant un décrochement permettant le passage d'un flux d'air.

En effet, en position de recirculation partielle, deux vortex se forment à l'intérieur du volume du volet mobile pivotant et créent des turbulences qui sont à l'origine du bruit constaté. Par le fait d'installer un déflecteur dans la partie concave, on sépare ainsi les vortex qui se forment éventuellement de sorte que les turbulences et ainsi la formation de bruit sont réduites. Il s'agit d'une solution simple et facilement implantable qui ne génère pas ou peu de coût supplémentaire.

Le volet mobile pivotant selon l'invention peut en outre présenter un ou plusieurs des aspects suivants, pris seuls ou en combinaison.

Selon un aspect, le déflecteur est réalisé sous forme d'une paroi.

Selon un autre aspect, le déflecteur est disposé symétriquement au fond du volet.

Le déflecteur peut être réalisé d'une seule pièce avec le volet mobile pivotant.

Dans ce cas, il s'avère judicieux que le déflecteur soit orienté dans le sens de démoulage du volet de façon à ce que l'impact du déflecteur sur la fabrication soit minimal.

Pour une bonne efficacité, le déflecteur possède une hauteur depuis la paroi concave d'au moins 26 mm.

Ce décrochement de passage d'un flux d'air frais possède par exemple une profondeur comprise entre 5 mm et 8 mm.

L'invention concerne également un boitier d'entrée d'air pour une installation de chauffage, ventilation et/ou climatisation pour un habitacle de véhicule automobile, caractérisé en ce qu'il comprend un volet tel que défini ci-dessus.

L'invention concerne de plus une installation de chauffage, ventilation et/ou climatisation pour un habitacle de véhicule automobile, caractérisé en ce qu'elle comprend un boitier d'entrée d'air tel que défini ci-dessus.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre un schéma d'une installation de chauffage, ventilation et/ou climatisation pour habitacle de véhicule automobile,
- la figure 2 montre une vue en perspective d'un boitier d'entrée d'air de la figure 1,
- la figure 3 montre une vue schématique en perspective d'un volet mobile selon l'invention, et
- la figure 4 montre une vue schématique d'un volet mobile en coupe transversale parallèle à l'axe de pivotement,
- la figure 5 montre une vue schématique d'un volet mobile en coupe transversale perpendiculaire à l'axe de pivotement, et
- la figure 6 montre une vue schématique de front d'un déflecteur.
Dans ces figures, les éléments sensiblement identiques portent les mêmes références.

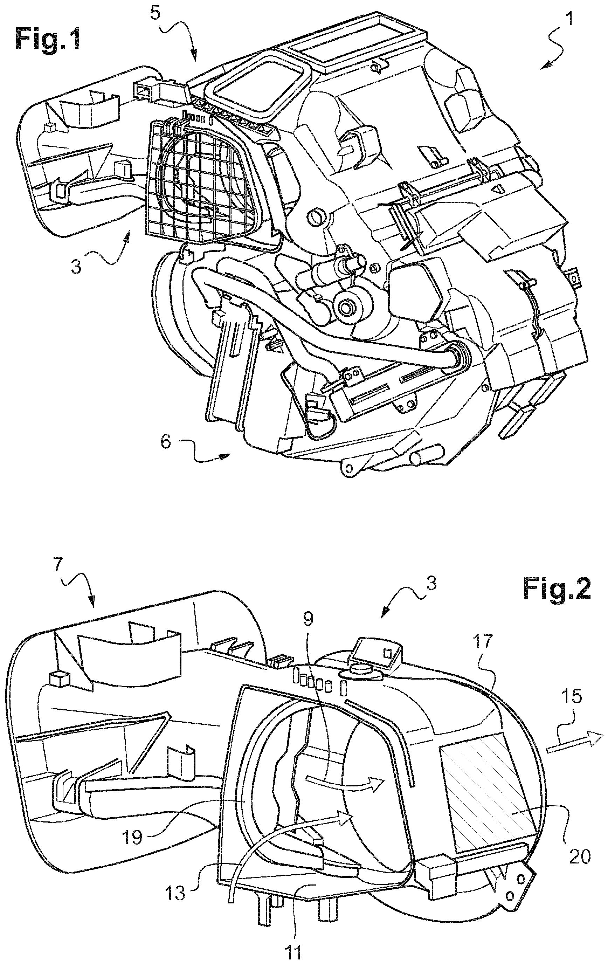

La figure 1 illustre de façon schématique une installation 1 de chauffage, ventilation et/ou climatisation pour habitacle de véhicule automobile.

Cette installation comprend un boitier d'entrée d'air 3 relié à une volute 5 logeant une roue, également appelée pulseur (non visible sur la figure). Cette volute 5 est ensuite reliée fluidiquement à un dispositif de traitement thermique 6.

Le boitier d'entrée d'air 3 et la volute 5 peuvent former deux pièces distinctes comme dans le présent exemple ou former une pièce unique reliée au dispositif de traitement thermique 6.

La figure 2 montre le boitier d'entrée d'air 3 plus en détail.

Le boitier d'entrée d'air 3 est équipé d'une bouche d'entrée d'air extérieur 7 permettant une admission à l'intérieur du boitier 1 d'un flux d'air extérieur 9 en provenance de l'extérieur de l'habitacle.

Le boitier 3 est également équipé d'une bouche d'entrée d'air de recirculation 11 permettant une admission à l'intérieur du boitier 3 d'un flux d'air de recirculation 13 en provenance de l'habitacle.

Une telle admission du flux d'air, indifféremment extérieur 9 et/ou de recirculation 13, est provoquée par la mise en oeuvre de la roue logée dans la volute 5.

Le flux d'air 15 est le flux d'air issu du boitier d'entrée d'air 3 s'acheminant vers l'intérieur de la volute 5 via une bouche de sortie d'air 17 pour être ensuite propulsé vers le dispositif de traitement thermique.

Entre la bouche de sortie d'air 17 du boitier d'entrée d'air 3 et ses bouches d'entrée d'air extérieur 7 et de recirculation 11, un volet pivotant 19 est mobile entre une première position extrême fermant la bouche d'entrée d'air de recirculation 11 et une deuxième position extrême fermant la bouche d'entrée d'air extérieur 7.

Lorsque le volet mobile 19 est dans sa première position extrême fermant la bouche d'entrée d'air de recirculation 11, l'installation de ventilation, chauffage et/ou climatisation est alors dans un mode d'alimentation en air extérieur.

Lorsque le volet mobile 19 est dans sa seconde position extrême fermant la bouche d'entrée d'air d'extérieur 7, l'installation de ventilation, chauffage et/ou climatisation est alors dans un mode d'alimentation en air recyclé.

Entre ses deux positions extrêmes, le volet mobile 19 peut prendre des positions intermédiaires (comme représentée sur la figure 2) assurant l'introduction à l'intérieur du boitier d'entrée d'air 3 à la fois d'un flux d'air extérieur 9 et d'un flux d'air de recirculation 13.

Par ailleurs, sur la figure 2, le boitier d'air 3 comporte en face de la bouche d'entrée d'air extérieur 7, un radiateur 20 permettant de dissiper la chaleur produite par le moteur entraînant la roue et par l'électronique de contrôle.

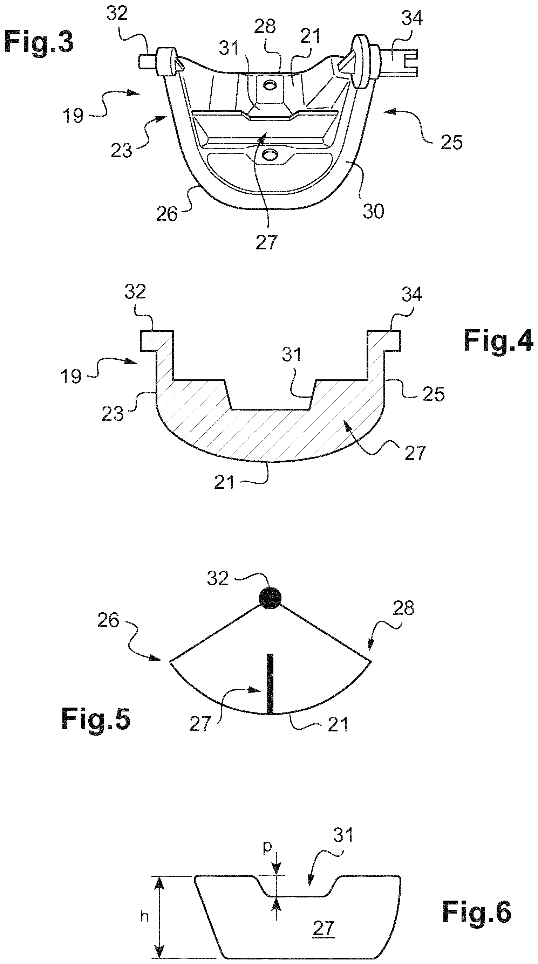

On se réfère maintenant aux figures 3 à 6 montrant le volet mobile pivotant 19 plus en détail.

Le volet mobile pivotant 19 du type volet tambour comprend une paroi concave 21 de renvoi d'un flux d'air bordée par deux parois latérales 23 et 25. Le volet 19 présente en outre deux tenons de pivotement 32 et 34 dont l'un est, par exemple, relié à un mécanisme d'actionnement motorisé permettant de mettre le volet 19 dans la position souhaitée.

De part et d'autre des deux tenons de pivotement 32 et 34, le volet 19 comprend des bords arrondis 26 et 28, chacun en forme de fer à cheval avec la partie ouverte dirigée vers les tenons de pivotement 32 et 34. Chaque bord arrondi est muni d'un joint d'étanchéité 30 qui vient en contact avec la paroi du boitier d'entrée d'air 3 dans les deux positions extrêmes décrites ci-dessus.

Le volet 19 comprend en outre un déflecteur 27 transversal, par exemple réalisé sous forme d'une paroi droite, se dressant par exemple verticalement, sensiblement en direction des tenons de pivotement 32 et 34 (voir figure 5) sur la paroi concave 21 et s'étendant entre les deux parois latérales 23 et 25.

Lorsque le volet 19 est dans une position de recirculation partielle, il se crée au niveau des bords 26 et 28 du volet 19, à l'intérieur du volume défini par le volet 19 au moins deux vortex dont un côté flux d'air extérieur 9 et un côté flux d'air de recirculation 13.

Le déflecteur 27 permet de séparer ces deux vortex ainsi formés et d'éviter les interactions entre eux et un battement qui conduit à la génération du bruit de grondement qui a été constaté avec les volets de l'art antérieur dans une position partielle de recirculation.

Le déflecteur 27 assure ainsi mieux le guidage de l'air d'extérieur et de l'air de recirculation vers la roue.

On a constaté une diminution de bruit compris entre 5 dB et 25 dB dans la bande de fréquence comprise entre 30 et 160 Hz, ceci sans induire une perte de charge supplémentaire pour les flux d'air.

Comme cela est montré sur la figure 5, le déflecteur 27 est disposé symétriquement au fond du volet 19, c'est-à-dire que le volume intérieur défini par la forme concave du volet 19 est divisé par le déflecteur 27 en deux volumes égaux, mais d'autres positions peuvent être envisagées du moment que le déflecteur 27 est transversal par rapport à la paroi 21 et présente une étendue de déflexion parallèle à l'axe de pivotement.

De préférence, le déflecteur 27 est réalisé d'une seule pièce avec le volet mobile pivotant 19 et moulé par injection en une seule pièce.

Pour faciliter le démoulage, la paroi formant le déflecteur 27 est alignée avec le sens de démoulage du volet lors de la fabrication.

Le déflecteur possède une hauteur h depuis le fond d'au moins 26 mm.

Par ailleurs, le déflecteur 27 comprend en outre un décrochement central 31 que l'on peut également qualifier d'entaille. Ce décrochement possède une forme de trapèze inversé, la petite base étant proximale par rapport à la partie concave du volet 21.

Ce décrochement central 31 permet d'augmenter le flux d'air frais en direction du radiateur 20, lorsque le volet 19 est dans une position de recirculation partielle.

Etant donné que grâce au décrochement central 31, on obtient un refroidissement plus efficace pour le radiateur 20 permettant de dissiper la chaleur produite par le moteur entraînant la roue et par l'électronique de contrôle, ce radiateur 20 peut être ainsi dimensionné de manière inférieure, ce qui constitue un gain en termes de coût et d'encombrement.

Le décrochement central 31 possède une profondeur d'environ 5 à 8 mm (hauteur du trapèze), par exemple 6 mm et une largeur d'environ 33 mm pour la grande base du trapèze et de 20mm pour la petite base du trapèze.

D'autres modes de réalisations sont envisageables sans sortir du cadre de la présente invention.

Ainsi, le déflecteur 27 peut aussi avoir une forme courbe.

Il peut s'agir d'une pièce supplémentaire, par exemple collée à l'intérieur du volet.

On comprend donc que le déflecteur 27 permet de résoudre de façon efficace et économique la génération de bruit dans une position d'ouverture/fermeture partielle du volet 19 du boitier 3 d'entrée d'air.

## Revendications

1. Volet mobile pivotant (19) d'une installation (1) de chauffage, ventilation et/ou climatisation pour un habitacle de véhicule automobile comprenant une paroi (21) concave de renvoi d'un flux d'air bordée par deux parois latérales (23, 25), ledit volet comprenant au moins un déflecteur transversal (27) se dressant sur la paroi concave (21) et s'étendant entre les deux parois latérales (23, 25), **caractérisé en ce que** ledit déflecteur (27) comprend un décrochement (31) permettant le passage d'un flux d'air.

2. Volet mobile pivotant selon la revendication 1, **caractérisé en ce que** le déflecteur (27) est réalisé sous forme d'une paroi.

3. Volet mobile pivotant selon la revendication 1 ou 2, **caractérisé en ce que** le déflecteur (27) est disposé symétriquement au fond du volet (19).

4. Volet mobile pivotant selon l'une quelconque des revendications 1 à 3, **caractérisé en ce que** le déflecteur (27) est réalisé d'une seule pièce avec le volet mobile pivotant (19).

5. Volet mobile pivotant selon la revendication 4, **caractérisé en ce que** déflecteur (27) est orienté dans le sens de démoulage du volet (19).

6. Volet mobile pivotant selon l'une quelconque des revendications 1 à 5, **caractérisé en ce que** le déflecteur (27) possède une hauteur (h) depuis la paroi concave (21) d'au moins 26 mm.

7. Volet mobile pivotant selon l'une quelconque des revendications précédentes, **caractérisé en ce que** le décrochement (31) de passage d'un flux d'air possède une profondeur comprise entre 5 mm et 8 mm.

8. Boitier (3) d'entrée d'air pour une installation de chauffage, ventilation et/ou climatisation pour un habitacle de véhicule automobile, **caractérisé en ce qu'**il comprend un volet (19) selon l'une quelconque des revendications 1 à 7.

9. Installation (1) de chauffage, ventilation et/ou climatisation pour un habitacle de véhicule automobile, **caractérisé en ce qu'**elle comprend un boitier (3) d'entrée d'air selon la revendication 8.

## Patentansprüche

1. Schwenkbare bewegliche Klappe (19) einer Heizungs- , Lüftungs- und/oder Klimatisierungsanlage (1) für einen Kraftfahrzeuginnenraum, die eine konkave Wand (21) zum Umlenken eines Luftstroms umrandet von zwei Seitenwänden (23, 25) enthält, wobei die Klappe mindestens eine Querleitschaufel (27) enthält, die auf der konkaven Wand (21) aufragt und sich zwischen den zwei Seitenwänden (23, 25) erstreckt, **dadurch gekennzeichnet, dass** die Leitschaufel (27) eine Ausbuchtung (31) enthält, die den Durchgang eines Luftstroms erlaubt.

2. Schwenkbare bewegliche Klappe nach Anspruch 1, **dadurch gekennzeichnet, dass** die Leitschaufel (27) in Form einer Wand hergestellt ist.

3. Schwenkbare bewegliche Klappe nach Anspruch 1 oder 2, **dadurch gekennzeichnet, dass** die Leitschaufel (27) symmetrisch am Boden der Klappe (19) angeordnet ist.

4. Schwenkbare bewegliche Klappe nach einem der Ansprüche 1 bis 3, **dadurch gekennzeichnet, dass** die Leitschaufel (27) aus einem Stück mit der schwenkbaren beweglichen Klappe (19) hergestellt ist.

5. Schwenkbare bewegliche Klappe nach Anspruch 4, **dadurch gekennzeichnet, dass** die Leitschaufel (27) in Richtung des Entformens der Klappe (19) ausgerichtet ist.

6. Schwenkbare bewegliche Klappe nach einem der Ansprüche 1 bis 5, **dadurch gekennzeichnet, dass** die Leitschaufel (27) eine Höhe (h) ausgehend von der konkaven Wand (21) von mindestens 26 mm besitzt.

7. Schwenkbare bewegliche Klappe nach einem der vorhergehenden Ansprüche, **dadurch gekennzeichnet, dass** die Ausbuchtung (31) für den Durchgang eines Luftstroms eine Tiefe zwischen 5 mm und 8 mm besitzt.

8. Lufteintrittsgehäuse (3) für eine Heizungs-, Lüftungs- und/oder Klimaanlage für einen Kraftfahrzeuginnenraum, **dadurch gekennzeichnet, dass** es eine Klappe (19) nach einem der Ansprüche 1 bis 7 enthält.

9. Heizungs-, Lüftungs- und/oder Klimaanlage (1) für einen Kraftfahrzeuginnenraum, **dadurch gekennzeichnet, dass** sie ein Lufteintrittsgehäuse (3) nach Anspruch 8 enthält.

## Claims

1. Movable pivoting flap (19) of a heating, ventilation and/or air conditioning unit (1) for a motor vehicle interior comprising a concave wall (21) for deflecting an air flow, which wall is flanked by two side walls (23, 25), said flap comprising at least one transverse deflector (27) rising up from the concave wall (21) and extending between the two side walls (23, 25), **characterized in that** said deflector (27) comprises a recess (31) allowing the passage of an air flow.

2. Movable pivoting flap according to Claim 1, **characterized in that** the deflector (27) is realized in the form of a wall.

3. The movable pivoting flap according to claim 1 or 2, **characterized in that** the deflector (27) is disposed symmetrically at the bottom of the flap (19).

4. Movable pivoting flap according to any one of Claims 1 to 3, **characterized in that** the deflector (27) is realized integrally with the movable pivoting flap (19) .

5. Movable pivoting flap according to Claim 4, **characterized in that** the deflector (27) is oriented in the unmolding direction of the flap (19).

6. Movable pivoting flap according to any one of Claims 1 to 5, **characterized in that** the deflector (27) has a height (h) from the concave wall (21) of at least 26 mm.

7. Movable pivoting flap according to any one of the preceding claims, **characterized in that** the recess (31) allowing the passage of a fresh air flow has a depth of between 5 mm and 8 mm.

8. Air intake casing (3) for a heating, ventilation and/or air conditioning unit for a motor vehicle interior, **characterized in that** it comprises a flap (19) according to any one of Claims 1 to 7.

9. Heating, ventilation and/or air conditioning unit (1) for a motor vehicle interior, **characterized in that** it comprises an air intake casing (3) according to Claim 8.
